# EUROPEAN PATENT SPECIFICATION

(11) **EP 3 184 362 B1**
(45) Date of publication and mention of the grant of the patent: **08.12.2021**
(21) Application number: 15202423.8
(22) Date of filing: 23.12.2015
(51) Int. Cl.: B60Q 1/14, B60Q 1/50

(54) **DRIVER ASSISTANCE SYSTEM AND METHOD FOR A MOTOR VEHICLE**
FAHRERASSISTENZSYSTEM UND -VERFAHREN FÜR EIN MOTORFAHRZEUG
SYSTÈME D'ASSISTANCE AU CONDUCTEUR ET PROCÉDÉ POUR VÉHICULE À MOTEUR

(43) Date of publication of application: 28.06.2017
(73) Proprietor: Veoneer Sweden AB, 447 83 Vårgårda (SE)
(72) Inventor: Isaksson, Markus, 58334 Linköping (SE); Roll, Jacob, 58597 Linköping (SE)
(74) Representative: Müller Verweyen

(56) References cited:
- EP-A2- 2 100 771
- WO-A1-2013/021795
- DE-A1-102012 024 148
- US-A1- 2004 149 895
- US-A1- 2008 129 206
- US-A1- 2009 167 188
- US-A1- 2012 299 478

## Description

The invention relates to a driver assistance system for a motor vehicle, comprising an adjustable headlight assembly with adjustable light characteristics, an imaging system adapted to capture images from a region in front of the motor vehicle, and a data processing device adapted to detect an oncoming other motor vehicle by image processing of the images captured by said imaging system and, if an oncoming vehicle is detected, to adjust said headlight assembly to a low light characteristic suited for passing the oncoming vehicle without dazzling the oncoming driver. The invention also relates to a corresponding driver assistance method.

In some countries it is common practice to continue driving with high beam on until one either gets dazzled by the oncoming vehicles headlight, or the oncoming vehicle turns off its own high beam. When a vehicle turns off its high beam, this signals the other vehicle also to turn off its high beam.

Dynamic headlight control systems can adjust the illumination such that it does not dazzle the driver of an oncoming vehicle even though it still illuminates the remaining part of the road and its surroundings.

A dynamic headlight control system is disclosed in US 2008/0129206 A1, wherein the illumination by the headlights can be adjusted depending, for example, on the driving speed of the ego vehicle or on the brightness of the brightest light source which relates to the distance between the ego vehicle and an oncoming vehicle.

EP 2 100 771 A2 discloses that the illumination by headlights of the ego vehicle depends on the distance between the ego vehicle and an oncoming vehicle. Above a threshold distance the high beam is turned on. Below the threshold distance the illumination pattern changes and the light intensity decreases gradually as the oncoming vehicle passes by.

In US 2009/0167188 A1 it is disclosed that the transition between high beam and low beam headlight occurs by means of a ramp, i.e., changing beam width, light distribution, light intensity, and/or orientation continuously. The transition can depend on the relative velocity between an oncoming vehicle and the ego vehicle. In one disclosed embodiment, the illumination pattern depends on a detected road user, e.g., a vehicle ahead the ego vehicle.

However, the adjustment of the illumination is not always recognized by drivers of an oncoming vehicle; instead it may look as if the high beam is still on. The fact that the beam from the headlight doesn't dazzle might simply be perceived as if the oncoming vehicle is still far away. A driver who does not recognize that the approaching vehicle has dynamic headlight control may then either continue with its own high beam turned on, dazzling the driver of the vehicle with dynamic headlight control. Or the oncoming driver may turn off its own high beam in a preemptive action. However, since the oncoming vehicle with dynamic headlight control apparently does not respond to this signal by turning off its high beam, the driver will typically follow up by blinking his high beam, or even turning the high beam on again until the oncoming vehicle responds by turning off the high beam.

DE 10 2012 024 148 A1 discloses the detection of the light intensity of a beam of the oncoming vehicle. In case the detected light intensity is zero or lies out of a pre-set, admissible range of values, the ego vehicle sends a communication signal to the other vehicle, for example by means of a sequence of headlight blinking, in order to cause the driver of the other vehicle to turn his high beam off. However, automatic signaling between the oncoming driver and the driver of the ego vehicle does not occur when the light intensity lies within the range of values.

The problem underlying the present invention is to provide a driver assistance system and method avoiding the above described difficulties.

The invention solves this problem with the features of the independent claims. When an oncoming vehicle is detected by processing the images from the imaging apparatus, a pre-adjustment of the headlight assembly is performed before adjusting it to the low light characteristic. According to the invention, the pre-adjustment comprises a distinguishable change of brightness of the light emitted by the headlight assembly in the direction of the oncoming driver. Due to the distinguishable pre-adjustment, the driver of the oncoming vehicle can recognize that the ego vehicle has noticed him and is willing to adjust its headlight in reaction to the oncoming vehicle. Therefore, the driver of the oncoming vehicle will not assume that the ego vehicle just continues with high beam on, and consequently will dim-out himself, or in case he already has dimmed out, refrain from blinking his high beam, or even turning on his high beam again.

In a preferred embodiment, the pre-adjustment comprises a perceivable intensity drop or dim-out in the direction of the oncoming driver performed significantly faster than the overall intensity change after detecting the oncoming vehicle to the low light characteristic. In particular, the time scale of the intensity drop is preferably below 1 s. Also, the intensity drop is at least 50% of the overall intensity change to the low light characteristic after detecting the oncoming vehicle. The above is based on the finding that the intensity drop in the prior art is often too slow for the oncoming driver to notice. Another reason for the oncoming driver not to notice the change in light intensity may be the use of advanced lightning systems illuminating the area around the oncoming vehicle which may trick the eye of the oncoming driver.

Preferably the pre-adjustment of the ego headlight comprises a reduction or dim-out to a distinguishable lower brightness in the direction of the oncoming driver compared to the low light characteristic. Such a dim-out, since it involves a larger brightness reduction than a reduction to the low light characteristic, provides a clear signal to the oncoming driver that the ego vehicle has noticed him and is willing to adjust its headlight in reaction to the oncoming vehicle.

In addition or alternatively to a distinguishable dim-out, the pre-adjustment may preferably comprise an increase to a state with a distinguishable higher brightness in the direction of the oncoming driver compared to the low light characteristic. In case such an increase is performed prior to a distinguishable dim-out according to the invention, the following dim-out is more distinguishable.

It is possible to use a distinguishable increase, with a following decrease or dim-out to the low light characteristic. Although in this case the brightness in the direction of the oncoming driver may not fall below the low light characteristic, nevertheless a distinguishable signal is sent to the oncoming driver that the ego vehicle has noticed him and is willing to adjust its headlight in reaction to the oncoming vehicle.

The pre-adjustment according to the invention can be realized in several manners, as will be described in the following.

In one embodiment, the pre-adjustment comprises a reduction and/or increase of the (total) headlight intensity, or wattage.

In another embodiment, the pre-adjustment comprises changing the angular distribution of the headlight intensity, for example by moving a light beam or light cone away from the direction of the oncoming driver. A light cone generally refers to a local maximum in the angular distribution of the light intensity. Changing the angular distribution of the light intensity may be preferable over the above mentioned changing of the (total) headlight intensity or wattage, in particular in cases where this is technically not feasible, i.e. where the total headlight intensity is not changeable or dimmable.

The pre-adjustment can also be realized by any suitable combination of the above embodiments, for example by changing the (total) headlight intensity or wattage, in combination with changing the angular distribution of the light intensity.

Normal dynamic headlight functionality should preferably be carried out from the first observation of an oncoming vehicle until potential activation of the distinguishable pre-adjustment. It can be beneficial to postpone a distinguishable pre-adjustment as long as possible. Typically it is not necessary to activate a pre-adjustment until either of the two situations or conditions described in the following is detected. Preferably the pre-adjustment is made in case dazzling of the ego driver by the oncoming vehicle's headlight is estimated and/or a full dim-out of the oncoming vehicle's headlight is detected. Regarding the first condition, a pre-adjustment is initiated if the headlight or high beam of the oncoming vehicle actually becomes a problem, i.e. when measurements of the headlight intensity from the oncoming vehicle shows that it's about to start dazzling the ego driver.

As described above, the pre-adjustment is made dependent on at least one condition of the oncoming vehicle's headlight evaluated by the data processing device. According to this aspect, the pre-adjustment can be tailored to the specific situation and condition of the oncoming vehicle's headlight. If the oncoming vehicle also has a dynamic headlight control, a distinguishable pre-adjustment of the headlights is not required. Since in that case none of the above conditions should be fulfilled, the encounter of the vehicles proceeds without activation of the pre-adjustment procedure.

Preferably the headlight assembly is maintained in the pre-adjusted state for a predetermined period of time, and/or until a pre-determined condition, in particular a dim-out performed by the oncoming vehicle, is met. In other words, the headlight assembly is maintained in the pre-adjusted state until the dim-out signal of the ego vehicle can be considered perceived by the oncoming vehicle driver.

According to the invention, the pre-adjustment is in any case made dependent on at least a dim-out condition of the oncoming vehicle headlight that is evaluated by the data processing device.

In the following the invention shall be illustrated on the basis of preferred embodiments with reference to the accompanying drawings, wherein:

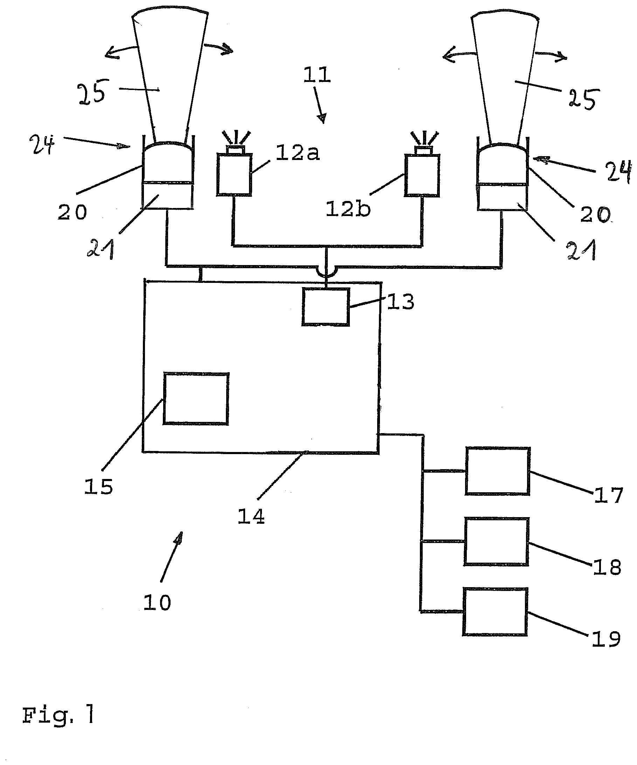

- Fig. 1: shows a schematic drawing of a driver assistance system according to the invention;
- Fig. 2: is a bird's view on a road for illustrating the invention in the case of an oncoming vehicle;
- Fig. 3a: an intensity diagram over time for illustrating a prior art driver assistance system; and
- Figs. 3b-3e: intensity diagrams over time for illustrating different embodiments of the invention.

The driver assistance system 10, which is a dynamic headlight control system, is mounted in a motor vehicle and comprises an imaging apparatus 11 for acquiring images of a region surrounding the motor vehicle, for example a region in front of the motor vehicle. Preferably the imaging apparatus 11 comprises one or more optical imaging devices 12a, 12b, in particular cameras, operating in the visible and/or infrared wavelength range, where infrared covers near IR with wavelengths below 5 microns and/or far IR with wavelengths beyond 5 microns. In some embodiments the imaging apparatus 11 comprises a plurality imaging devices 12a, 12b in particular forming a stereo imaging apparatus 11. In other embodiments only one imaging device 12 forming a mono imaging apparatus 11 can be used.

The imaging apparatus 11 is coupled to a data processing device 14 adapted to process the image data received from the imaging apparatus 11. The data processing device 14 may comprise a pre-processing section 13 adapted to control the capture of images by the imaging apparatus 11, receive the electrical signal containing the image information from the imaging apparatus 11, rectify or warp pairs of left/right images into alignment and/or create disparity or depth images, which per se is known in the art. The image pre-processing section 13 may be realized by a dedicated hardware circuit, for example a Field Programmable Gate Array (FPGA). Alternatively the pre-processing section 13, or part of its functions, can be realized by software in a microprocessor. In the case of a vision system 10 using only one camera 12 the pre-processing section 13 may not be needed.

Further image and data processing carried out in the processing device 14 by corresponding software advantageously comprises identification and classification of possible objects surrounding the motor vehicle, such as pedestrians, other vehicles, bicyclists or large animals; tracking over time the position of identified object candidates in the captured images; estimation of a collision probability between the vehicle and a detected object; and/or activation or control of at least one driver assistance means 17 to 19 depending on the result of said collision probability estimation. The driver assistance means 17 to 19 may in particular comprise a display means 17 for displaying information relating to a detected object. However, the invention is not limited to a display means. The driver assistance means 17 to 19 may in addition or alternatively comprise a warning means adapted to provide a collision warning to the driver by suitable optical, acoustical and/or haptical warning signals; one or more restraint systems such as occupant airbags or safety belt tensioners, pedestrian airbags, hood lifters and the like; and/or dynamic vehicle control systems such as brakes or steering means. The processing device 14 preferably has access to, or comprises, a memory means 15.

The data processing device 14 is preferably a digital device which is programmed or programmable and preferably comprises a microprocessor, micro-controller or a digital signal processor (DSP). The data processing device 14, pre-processing section 13 and the memory device 15 are preferably realised in an onboard electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image pre-processing, image processing to possible activation or control of driver assistance device 18 are performed automatically and continuously during driving in real time.

The driver assistance system 10 comprises an adjustable headlight assembly 24 with at least one dynamically adjustable headlight 20, here a plurality, for example two, dynamically adjustable headlights 20. Each dynamically adjustable headlight 20 comprises an adjustment device 21 by which it is possible to adjust the corresponding headlight 20 in such a manner that the light beam or light cone 25 emitted by the headlight 20 is moved, here in a lateral direction, alternatively in a vertical direction or any other direction, as indicated by the arrows at the side of the light cones 25. The adjustment device 21 can be adapted to turn the complete headlight unit 20, to block or shield different parts of the light beam 25, to move one or more optical elements within the headlight unit 20, to change optical properties of one or more optical elements within the headlight unit 20, or any other suitable mechanism. The adjustable headlight assembly 24 may be an advanced lightning system, in particular based on LEDs, which can shape the light beam 25 around the oncoming vehicle 33 without dazzling the oncoming driver 34, which however may trick the eye of the oncoming driver 34.

As will be described in the following in more detail, the adjustment devices 21 for the headlights 20 are controlled during driving by the data processing device 14 on the basis of results obtained from data processing of the images received from the imaging apparatus 11. This is also called dynamic headlight control. Therefore, the data processing device 14 comprises or forms a dynamic headlight control device or controller.

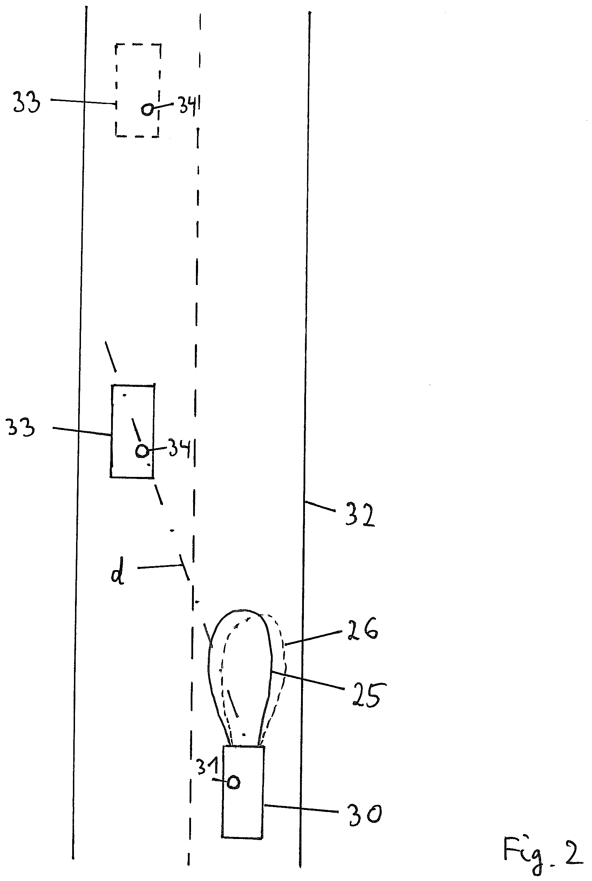

As shown in Figure 2, the ego vehicle 30 with ego driver 31 is driving along a road 32, where on the other lane an oncoming vehicle 33 with an oncoming driver 34 is coming. Before the oncoming vehicle 33 is visible to the ego driver 31, the headlights 20 of the ego vehicle 30 generate a standard light beam 25 which is optimal for illuminating the oncoming road. In some embodiments, the standard light beam 25 may dazzle the oncoming driver 34 during passing of the ego vehicle 30. Typically, the standard light beam 25 is generated by a high beam device of the headlight assembly 20. In other embodiments, the standard light beam 25 may be below the threshold of dazzling the oncoming driver 34 during passing of the ego vehicle 30, which however may be difficult to distinguish by the oncoming driver 34.

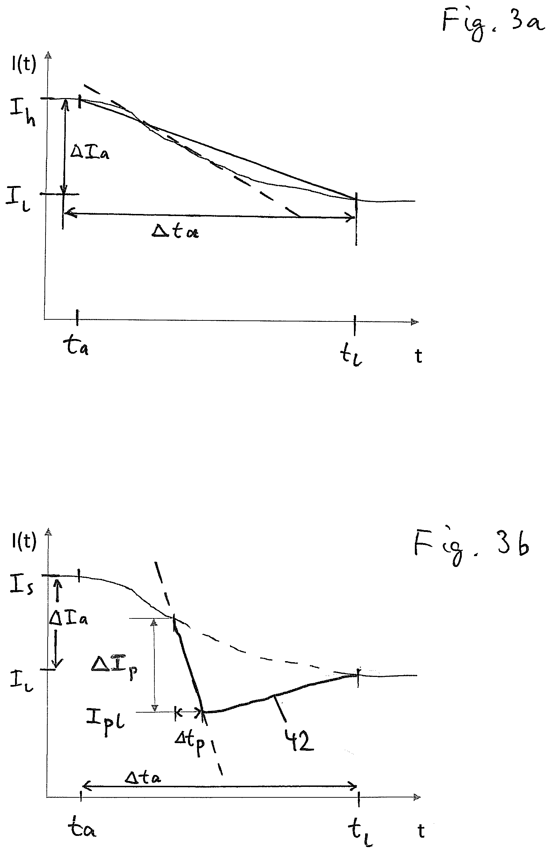

An example of dynamic headlight light control of the prior art is shown in Figure 3a. In Figures 3a to 3e, the intensity I of the light generated by the at least one headlight 20 of the headlight assembly 24 of the ego vehicle 30 in the direction d to the oncoming driver 34 (see Figure 2) is depicted over time.

In Figure 3a, before the oncoming vehicle 33 is visible, the ego vehicle 30 has high beam on. The light intensity I emitted by the at least one headlight 20 of the ego vehicle in the direction of the oncoming driver 34, or in other words the light intensity perceivable by an oncoming driver 34, has the value Ih. At some point in time the high beam assistant of the ego vehicle 30 recognizes the oncoming vehicle 33 and performs a gradual dim-out of the headlight assembly 24 to a low intensity level Il below the threshold of dazzling the oncoming driver 34 during passing of the ego vehicle 30.

The time ta marks the time when the adjustment of the headlight assembly 24 starts, i.e. when the change of the beam of the headlight assembly 24 relative to the beam 25 present before detection of the oncoming vehicle 33. The time tl marks the time when the adjustment of the headlight assembly 24 ends, i.e. when the low intensity level Il for passing the oncoming vehicle 33 without dazzling the oncoming driver 34 is reached.

From Figure 3a it can be seen that the gradual decrease of the headlight intensity in the direction of the oncoming driver is too slow for the oncoming driver 34 to notice, in other words the slope ΔIa/Δt = (Ih-Il)/(tl-ta) of the headlight adjustment ΔIa is too small. Even the maximum decrease speed (dashed line in Figure 3b) is only slightly higher than ΔIa/Δt. Furthermore, the difference between the high intensity level Ih and the low intensity level Il may be small in the case of dynamic headlight light control systems. For the above reasons, the oncoming driver 34 may not recognize that the ego vehicle 30 is actually not dazzling the oncoming driver 34, who may wrongly assume that the ego vehicle 30 is still far away from him. In this case, the oncoming driver 34 may either continue with its own high beam turned on, dazzling the ego driver 31, or, if he has already turned off his own high beam, start blinking his high beam, or even turn his high beam on again. In an embodiment of the invention according to Figure 3b, normal dynamic headlight functionality with standard intensity Is is carried out in the ego vehicle 30, where normal dynamic headlight functionality can in particular be high beam on, or generating a bright light beam below the dazzling threshold. This standard dynamic headlight functionality is maintained from the first observation of the oncoming vehicle 33 (upper position in Figure 2, dashed rectangle) as long as possible, namely until at least the latter one of the following conditions is met: the data processing device 14, based on the images provided by the imaging system 11, estimates that the ego driver 31 is dazzled by the headlight of the oncoming vehicle 33; the data processing device 14 detects, based on the images provided by the imaging system 11, a dim-out of the headlight of the oncoming vehicle 33.

When at least the detection of a dim-out of the headlight of the oncoming vehicle is made , the data processing device 14 controls the adjustment device 21 to perform a pre-adjustment of the headlight assembly 24 by performing a fast dim-out ΔIp to an intensity level Ipl in the direction of the oncoming driver which is preferably lower than the intensity level Il suited for passing the oncoming vehicle 33 without dazzling the oncoming driver 34. The pre-adjustment dim-out 40 is preferably performed by moving the light beam or light pattern generated by the ego headlight assembly 24 from the standard position 25 to a pre-adjustment position, shown dashed in Figure 2, in a direction away from the oncoming vehicle 33, i.e. away from the other lane, in countries with right-hand traffic for example to the right.

Since the light intensity drop ΔIp in the direction of the driver from Is to Ipl is performed significantly faster than the conventional adjustment, i.e. ΔIp/Δtp > ΔIa/Δta, preferably by at least a factor of two, more preferably by at least a factor of three, still more preferably by at least a factor of four, even more preferably by at least a factor of five, the pre-adjustment dim-out ΔIp is clearly distinguishable by the oncoming driver 34 who will consequently perform a dim-out himself, or, if already performed, refrain from blinking high beam or even turn on high beam again. In other words, an explicit dim-out signal ΔIp is sent to the oncoming driver 34.

In all embodiments of the invention, the dim-out ΔIp shall be perceivable to the oncoming driver 34. Therefore, in addition to be performed relatively fast (small Δtp), the intensity drop ΔIp relative to ΔIa = Is-Il is preferably at least 50%, more preferably at least 75%, even more preferably at least 100%. The time scale Δtp of the dim-out or pre-adjustment according to the invention is preferably below 1 s, for example around 0.5 s.

The ego headlight assembly 24 stays in the pre-adjusted state either for a predetermined period of time, and/or until a predetermined condition is met, in particular a dim-out performed by the oncoming vehicle 33 (in the case where the pre-adjustment dim-out was initiated following estimated dazzling of the ego driver 31 by the oncoming vehicle's headlights). In other words, the ego headlight assembly 24 stays in the pre-adjusted state 41 until the dim-out signal ΔIp of the ego vehicle 30 can be considered perceived by the oncoming vehicle driver 34. After elapse of predetermined period of time or the predetermined condition is met, the data processing device 14 controls the adjustment device 21 to perform a slow movement of the headlight assembly 24 in the opposite direction as the dim-out ΔIp, leading to a smooth raise 42 of the headlight intensity in the direction of the oncoming driver to the intensity level Il suited for passing the oncoming vehicle 33 without dazzling the oncoming driver 34. The time scale of the raise 42 is slower than the time scale Δtp of the dim-out, for instance by a factor between 1 and 3.

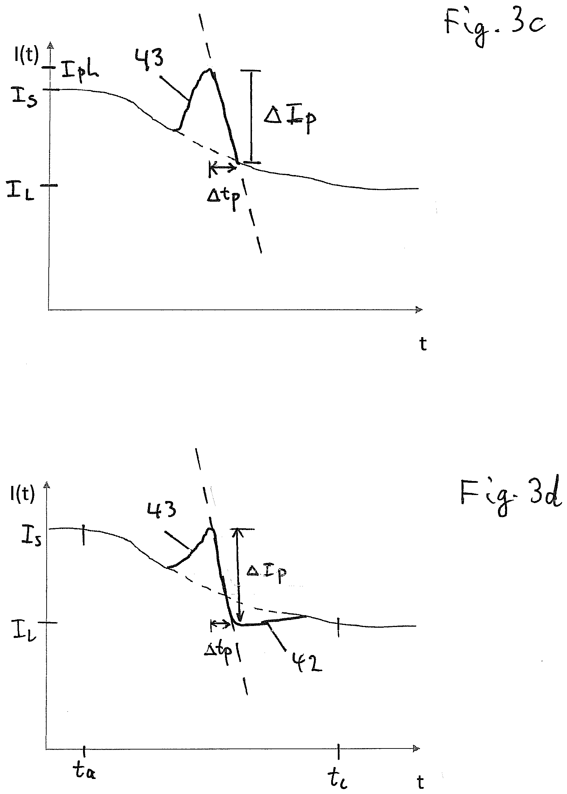

In the further embodiment of the invention according to Figure 3c, the pre-adjustment procedure comprises, prior to the dim-out ΔIp, a preferably slower movement of the headlight assembly 24 in the opposite direction as the subsequent dim-out ΔIp, leading to a smooth raise 43 of the headlight intensity in the direction of the oncoming driver to the intensity level Iph preferably above the standard level Is. The time scale of the raise 43 is preferably slower than the time scale Δtp of the dim-out, in particular by a factor between 1 and 3.

The further embodiment of the invention according to Figure 3d combines the embodiments of Figures 3b and 3c by first performing a smooth raise 43, then performing the perceivable dim-out ΔIp, finally performing the smooth raise 42 to the non-dazzling intensity level Il. In this embodiment, since the pre-adjustment intensity drop ΔIp in the direction of the oncoming driver 34 can be even higher than in the embodiments of Figures 3b or 3c, the pre-adjustment dim-out ΔIp is even better perceivable to the oncoming driver 34.

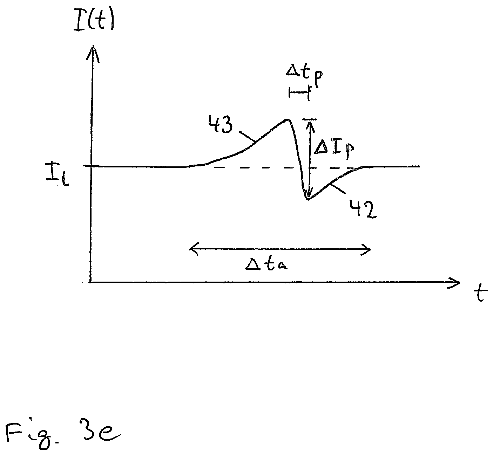

The further embodiment of Figure 3e relates to a case where the headlight assembly 24 already is in the low intensity state Il when detecting the oncoming vehicle. Here again, Il is below the threshold of dazzling the oncoming driver 34 during passing of the ego vehicle 30, which, however, may be difficult to distinguish by the oncoming driver 34. Apart from this, the embodiment corresponds to that of Figure 3d, i.e. first performing a smooth raise 43, then performing the perceivable fast dim-out ΔIp, finally performing the smooth raise 42 to the non-dazzling intensity level Il.

Embodiments analogous to those of Figures 3b and 3c but with Is = Il are also possible.

## Claims

1. A driver assistance system (10) for a motor vehicle, comprising an adjustable headlight assembly (24) with adjustable light characteristics, an imaging system (11) adapted to capture images from a region in front of the motor vehicle, and a data processing device (14) adapted to detect an oncoming other motor vehicle by image processing of the images captured by said imaging system (11) and, if an oncoming vehicle is detected, to adjust said headlight assembly (24) to a low light characteristic (Il) suited for passing the oncoming vehicle without dazzling the oncoming driver, wherein said data processing device (14), if an oncoming vehicle is detected, is adapted to perform a pre-adjustment to said headlight assembly (24) before adjusting it to said low light characteristic (Il), wherein said pre-adjustment comprises a change of brightness, distinguishable by the oncoming driver, of the light emitted by the headlight assembly (24) in the direction of the oncoming driver, wherein said pre-adjustment is made dependent on at least one condition of the oncoming vehicle's headlight evaluated by said data processing device, **characterized in that** said condition comprises a dim-out of the oncoming vehicle's headlight.

2. The driver assistance system as claimed in claim 1, **characterized in that** said pre-adjustment comprises an intensity drop ΔIp/Δtp in the direction of the oncoming driver performed significantly faster than the overall intensity change ΔIa/Δta after detecting the oncoming vehicle to said low light characteristic (Il).

3. The driver assistance system as claimed in claim 2, **characterized in that** the time scale Δtp of the intensity drop is below 1 s.

4. The driver assistance system as claimed in claim 2 or 3, **characterized in that** intensity drop ΔIp is at least 50% of the overall intensity change ΔIa = Is-Il after detecting the oncoming vehicle to said low light characteristic (Il).

5. The driver assistance system as claimed in any one of the preceding claims, **characterized in that** said pre-adjustment comprises a reduction or dim-out to a lower brightness (Ipl), distinguishable by the oncoming driver, in the direction of the oncoming driver compared to the low light characteristic (Il).

6. The driver assistance system as claimed in any one of the preceding claims, **characterized in that** said pre-adjustment comprises an increase to a higher brightness (Iph), distinguishable by the oncoming driver, in the direction of the oncoming driver compared to the low light characteristic.

7. The driver assistance system as claimed in any one of the preceding claims, **characterized in that** said pre-adjustment comprises a reduction and/or increase of the headlight intensity.

8. The driver assistance system as claimed in any one of the preceding claims, **characterized in that** said pre-adjustment comprises changing the angular distribution of the headlight intensity.

9. The driver assistance system as claimed in any one of the preceding claims, **characterized in that** said pre-adjustment comprises a movement of a light beam or light cone away from the direction of the oncoming driver.

10. The driver assistance system as claimed in any one of the preceding claims, **characterized in that** said condition additionally comprises estimated dazzling of the ego driver by the oncoming vehicle's headlight.

11. The driver assistance system as claimed in any one of the preceding claims, **characterized in that** the headlight assembly (24) is maintained in the pre-adjusted state for a predetermined period of time.

12. The driver assistance system as claimed in any one of the preceding claims, **characterized in that** the headlight assembly (24) is maintained in the pre-adjusted state until a pre-determined condition is met, wherein in particular said condition comprises a dim-out performed by the oncoming vehicle.

13. A driver assistance method for a motor vehicle having an adjustable headlight assembly (24) with adjustable light characteristics, said method comprising capturing images from a region in front of the motor vehicle, detecting an oncoming other motor vehicle by image processing of the captured images and, if an oncoming vehicle is detected, adjusting said headlight assembly (24) to a low light characteristic (Il) suited for passing the oncoming vehicle without dazzling the oncoming driver, wherein, if an oncoming vehicle is detected, performing a pre-adjustment to said headlight assembly (24) before adjusting it to said low light characteristic (Il), wherein said pre-adjustment comprises changing the headlight to a different brightness, distinguishable by the oncoming driver, of the light emitted by the headlight assembly (24) in the direction of the oncoming driver, wherein said pre-adjustment is made dependent on at least one condition of the oncoming vehicle's headlight evaluated by said data processing device, **characterized in that** said condition comprises a dim-out of the oncoming vehicle's headlight.

## Patentansprüche

1. Ein Fahrerassistenzsystem (10) für ein Kraftfahrzeug, das eine einstellbare Scheinwerferanordnung (24) mit einstellbaren Lichtcharakteristiken, ein Bilderfassungssystem (11), das dazu eingerichtet ist, Bilder von einem Bereich vor dem Kraftfahrzeug zu erfassen, und eine Datenverarbeitungsvorrichtung (14) umfasst, die dazu eingerichtet ist, ein entgegenkommendes anderes Kraftfahrzeug durch Bildverarbeitung der von dem Bilderfassungssystem (11) erfassten Bilder zu detektieren und, wenn ein entgegenkommendes Fahrzeug detektiert wird, die Scheinwerferanordnung (24) auf eine Schwachlichtcharakteristik (Il) einzustellen, die geeignet ist, das entgegenkommende Fahrzeug zu passieren, ohne den entgegenkommenden Fahrer zu blenden, wobei die Datenverarbeitungsvorrichtung (14), wenn ein entgegenkommendes Fahrzeug detektiert wird, dazu eingerichtet ist, eine Voreinstellung der Scheinwerferanordnung (24) durchzuführen, bevor sie auf die Schwachlichtcharakteristik (I1) eingestellt wird, wobei die Voreinstellung eine für den entgegenkommenden Fahrer erkennbare Änderung der Helligkeit des von der Scheinwerferanordnung (24) in Richtung des entgegenkommenden Fahrers ausgestrahlten Lichts umfasst, wobei die Voreinstellung von mindestens einem Zustand des Scheinwerfers des entgegenkommenden Fahrzeugs abhängig gemacht wird, der von der Datenverarbeitungsvorrichtung evaluiert wird, **dadurch gekennzeichnet, dass** der Zustand ein Abblenden des Scheinwerfers des entgegenkommenden Fahrzeugs umfasst.

2. Das Fahrerassistenzsystem nach Anspruch 1, **dadurch gekennzeichnet, dass** die Voreinstellung einen Intensitätsabfall ΔIp/Δtp in Richtung des entgegenkommenden Fahrers umfasst, der signifikant schneller als die Gesamtintensitätsänderung ΔIa/Δta nach Erkennung des entgegenkommenden Fahrzeugs auf die Schwachlichtcharakteristik (Il) erfolgt.

3. Das Fahrerassistenzsystem nach Anspruch 2, **dadurch gekennzeichnet, dass** die Zeitspanne Δtp des Intensitätsabfalls unter 1 s liegt.

4. Das Fahrerassistenzsystem nach Anspruch 2 oder 3, **dadurch gekennzeichnet, dass** der Intensitätsabfall ΔIp mindestens 50% der Gesamtintensitätsänderung ΔIa = Is-Il nach dem Erkennen des entgegenkommenden Fahrzeugs auf die Schwachlichtcharakteristik (Il) beträgt.

5. Das Fahrerassistenzsystem nach einem der vorangehenden Ansprüche, **dadurch gekennzeichnet, dass** die Voreinstellung eine Verringerung oder Abblendung auf eine geringere, vom entgegenkommenden Fahrer unterscheidbare Helligkeit (Ipl) in Richtung des entgegenkommenden Fahrers im Vergleich zur Schwachlichtcharakteristik (Il) umfasst.

6. Das Fahrerassistenzsystem nach einem der vorangehenden Ansprüche, **dadurch gekennzeichnet, dass** die Voreinstellung eine Erhöhung auf eine höhere, vom entgegenkommenden Fahrer unterscheidbare Helligkeit (Iph) in Richtung des entgegenkommenden Fahrers im Vergleich zur Schwachlichtcharakteristik umfasst.

7. Das Fahrerassistenzsystem nach einem der vorangehenden Ansprüche, **dadurch gekennzeichnet, dass** die Voreinstellung eine Verringerung und/oder Erhöhung der Scheinwerferintensität umfasst.

8. Das Fahrerassistenzsystem nach einem der vorangehenden Ansprüche, **dadurch gekennzeichnet, dass** die Voreinstellung eine Änderung der Winkeldistribution der Scheinwerferintensität umfasst.

9. Das Fahrerassistenzsystem nach einem der vorangehenden Ansprüche, **dadurch gekennzeichnet, dass** die Voreinstellung eine Bewegung eines Lichtstrahls oder Lichtkegels weg von der Richtung des entgegenkommenden Fahrers umfasst.

10. Das Fahrerassistenzsystem nach einem der vorangehenden Ansprüche, **dadurch gekennzeichnet, dass** der Zustand zusätzlich eine geschätzte Blendung des Ego-Fahrers durch das Scheinwerferlicht des entgegenkommenden Fahrzeugs umfasst.

11. Das Fahrerassistenzsystem nach einem der vorangehenden Ansprüche, **dadurch gekennzeichnet, dass** die Scheinwerferanordnung (24) für eine vorbestimmte Zeitspanne in dem voreingestellten Zustand gehalten wird.

12. Das Fahrerassistenzsystem nach einem der vorangehenden Ansprüche, **dadurch gekennzeichnet, dass** die Scheinwerferanordnung (24) in dem voreingestellten Zustand gehalten wird, bis eine vorbestimmte Bedingung erfüllt ist, wobei diese Bedingung insbesondere ein Abblenden durch das entgegenkommende Fahrzeug umfasst.

13. Ein Fahrerassistenzverfahren für ein Kraftfahrzeug mit einer einstellbaren Scheinwerferanordnung (24) mit einstellbaren Lichtcharakteristiken, wobei das Verfahren das Erfassen von Bildern von einem Bereich vor dem Kraftfahrzeug, das Detektieren eines entgegenkommenden anderen Kraftfahrzeugs durch Bildverarbeitung der erfassten Bilder und, wenn ein entgegenkommendes Fahrzeug detektiert wird, das Einstellen der Scheinwerferanordnung (24) auf eine Schwachlichtcharakteristik (Il) umfasst, die geeignet ist, das entgegenkommende Fahrzeug zu passieren, ohne den entgegenkommenden Fahrer zu blenden, wobei, wenn ein entgegenkommendes Fahrzeug detektiert wird, Durchführen einer Voreinstellung der Scheinwerferanordnung (24), bevor sie auf die Schwachlichtcharakteristik (Il) eingestellt wird, wobei die Voreinstellung das Ändern des Scheinwerfers auf eine andere, für den entgegenkommenden Fahrer unterscheidbare Helligkeit des von der Scheinwerferanordnung (24) in Richtung des entgegenkommenden Fahrers ausgestrahlten Lichts umfasst, wobei die Voreinstellung von mindestens einem Zustand des Scheinwerfers des entgegenkommenden Fahrzeugs abhängig gemacht wird, der von der Datenverarbeitungsvorrichtung evaluiert wird, **dadurch gekennzeichnet, dass** der Zustand ein Abblenden des Scheinwerfers des entgegenkommenden Fahrzeugs umfasst.

## Revendications

1. Un système d'assistance au conducteur (10) pour un véhicule à moteur, comprenant un ensemble feux avant (24) réglable ayant des caractéristiques lumineuses réglables, un système d'imagerie (11) adapté pour capturer des images d'une zone située en face du véhicule à moteur, et un dispositif de traitement de données (14) adapté pour détecter un autre véhicule à moteur venant en sens inverse par traitement d'image des images capturées par ledit système d'imagerie (11) et, si un véhicule venant en sens inverse est détecté, pour régler ledit ensemble feux avant (24) sur une caractéristique de faible luminosité (Il) appropriée pour croiser le véhicule venant en sens inverse sans éblouir le conducteur venant en sens inverse, ledit dispositif de traitement de données (14) étant adapté pour, si un véhicule venant en sens inverse est détecté, effectuer un préréglage dudit ensemble feux avant (24) avant de le régler sur ladite caractéristique de faible luminosité (Il), ledit préréglage comprenant une modification de la luminosité, perceptible par le conducteur venant en sens inverse, de la lumière émise par l'ensemble feux avant (24) dans la direction du conducteur venant en sens inverse, ledit préréglage étant dépendant d'au moins un état de feu avant du véhicule venant en sens inverse évalué par ledit dispositif de traitement de données, **caractérisé en ce que** ledit état comprend un assombrissement du feu avant du véhicule venant en sens inverse.

2. Le système d'assistance au conducteur selon la revendication 1, **caractérisé en ce que** ledit préréglage comprend une baisse d'intensité ΔIp/ Δtp en direction du conducteur venant en sens inverse effectuée considérablement plus vite que la modification totale de l'intensité ΔIa/ Δta en ladite caractéristique de faible luminosité (Il) après la détection du véhicule venant en sens inverse.

3. Le système d'assistance au conducteur selon la revendication 2, **caractérisé en ce que** l'échelle de temps Δtp de la baisse d'intensité est inférieure à 1 s.

4. Le système d'assistance au conducteur selon la revendication 2 ou 3, **caractérisé en ce que** la baisse d'intensité ΔIp est égale à au moins 50 % de la modification totale de l'intensité ΔIa = Is-Il en ladite caractéristique de faible luminosité (Il) après la détection du véhicule venant en sens inverse.

5. Le système d'assistance au conducteur selon l'une quelconque des revendications précédentes, **caractérisé en ce que** ledit préréglage comprend une réduction ou un assombrissement à une luminosité plus faible (Ipl), perceptible par le conducteur venant en sens inverse, dans la direction du conducteur venant en sens inverse comparée à la caractéristique de faible luminosité (Il).

6. Le système d'assistance au conducteur selon l'une quelconque des revendications précédentes, **caractérisé en ce que** ledit préréglage comprend une augmentation à une luminosité supérieure (Iph), perceptible par le conducteur venant en sens inverse, dans la direction du conducteur venant en sens inverse, comparée à la caractéristique de faible luminosité.

7. Le système d'assistance au conducteur selon l'une quelconque des revendications précédentes, **caractérisé en ce que** ledit préréglage comprend une réduction et/ou augmentation de l'intensité du feu avant.

8. Le système d'assistance au conducteur selon l'une quelconque des revendications précédentes, **caractérisé en ce que** ledit préréglage comprend la modification de la distribution angulaire de l'intensité du feu avant.

9. Le système d'assistance au conducteur selon l'une quelconque des revendications précédentes, **caractérisé en ce que** ledit préréglage comprend un écartement d'un faisceau lumineux ou cône lumineux par rapport à la direction du conducteur venant en sens inverse.

10. Le système d'assistance au conducteur selon l'une quelconque des revendications précédentes, **caractérisé en ce que** ledit état comprend en outre un éblouissement estimé de l' égo-conducteur par le feu avant du véhicule venant en sens inverse.

11. Le système d'assistance au conducteur selon l'une quelconque des revendications précédentes, **caractérisé en ce que** l'ensemble feux avant (24) est maintenu dans l'état préréglé pendant une période de temps prédéfinie.

12. Le système d'assistance au conducteur selon l'une quelconque des revendications précédentes, **caractérisé en ce que** l'ensemble feux avant (24) est maintenu dans l'état préréglé jusqu'à ce qu'un état prédéfini soit satisfait, ledit état comprenant en particulier un assombrissement effectué par le véhicule venant en sens inverse.

13. Un procédé d'assistance au conducteur pour un véhicule à moteur, présentant un ensemble feux avant (24) réglable ayant des caractéristiques lumineuses réglables, ledit procédé comprenant la capture d'images d'une zone située en face du véhicule à moteur, la détection d'un autre véhicule à moteur venant en sens inverse par traitement d'image des images capturées et, si un véhicule venant en sens inverse est détecté, le réglage dudit ensemble feux avant (24) sur une caractéristique de faible luminosité (Il) appropriée pour croiser le véhicule venant en sens inverse sans éblouir le conducteur venant en sens inverse, dans lequel, si un véhicule venant en sens inverse est détecté, l'exécution d'un préréglage dudit ensemble feux avant (24) avant de le régler sur ladite caractéristique de faible luminosité (Il), ledit préréglage comprenant une modification du feu avant pour obtenir une luminosité différente, perceptible par le conducteur venant en sens inverse, de la lumière émise par l'ensemble feux avant (24) dans la direction du conducteur venant en sens inverse, ledit préréglage dépendant d'au moins un état de feu avant du véhicule venant en sens inverse évalué par ledit dispositif de traitement de données, **caractérisé en ce que** ledit état comprend un assombrissement du feu avant du véhicule venant en sens inverse.
